# EUROPEAN PATENT APPLICATION

(11) **EP 2 058 175 A2**
(43) Date of publication of application: **13.05.2009**
(21) Application number: 08168364.1
(22) Date of filing: 05.11.2008
(51) Int. Cl.: B60Q 1/26, B60Q 3/06, B60R 5/04

(54) **Cargo box**

(30) Priority: 06.11.2007 US 935709
(71) Applicant: Deere & Company, Moline, IL 61265-8098 (US)
(72) Inventor: Hohnl, Gary D., Slinger, WI 53086 (US); Roberts, Dennis J., Menomonee Falls, WI 53051 (US); Weber, Cindy L., Charlotte, NC 28203 (US); Krasic, Michael, Hamilton, Ontario L8E 3T6 (CA); Zwart, Terry, Breezy Point, MN 56472 (US); Thiemke, Daniel B., Sun Prairie, WI 53590 (US); Chritton, Kenneth, Slinger, WI 53086 (US); Piber, Kenneth J., Davenport, IA 52804 (US)
(74) Representative: Löser, Iris

(57) **Abstract**

A cargo box (100) for a utility vehicle has a metal floor (102) and composite polymer side panels (104, 106). The side panels (104, 106) may be fastened to the floor (102) such that relative movement may occur. Stiffening members (112, 114) resist rearward movement of the side panels (104, 106) that could result in a gap between the cargo box (100) and tail gate (176).

## Description

This invention relates to cargo boxes for off-road utility vehicles used for agricultural, industrial or recreational purposes.

Off-road utility vehicles are often equipped with cargo boxes for carrying various items including tools, supplies, or material. Utility vehicle cargo boxes are typically constructed of steel panels with a supporting frame under the floor. Composite materials, or other light weight materials such as blow-molded plastics, are not used because they are subject to high thermal expansion that can reduce the rigidity, and integrity of the cargo box. A cargo box for a utility vehicle is needed that utilizes light weight materials and provides high strength and durability.

Additionally, utility vehicle cargo boxes are relatively small, making it difficult to carry long items, they lack illumination of the cargo box interior, and lack adequate and easily accessible tie down straps or clamps, both in the cargo box interior and overhead. A cargo box for a utility vehicle is needed that can carry large or long items, provide illumination of the cargo box interior, and provides sufficient easily accessible tie down straps and clamps for cargo to be stored conveniently.

It is therefore the object of the present invention to comply with one or all of these needs respectively.

This object is met according to the invention by the teaching of claim, while features developing the solution in an advantageous manner are set forth in the further claims.

A cargo box for a utility vehicle may include removable light weight polymer side panels fastened to a metal floor. The side panels may move fore and aft relative to the floor. Stiffening members may hold the rear of each side panel in a stationary position at the rear of the cargo box bed. Attachments may be mounted to the side panels using dovetail mounting attachments or accessory bars.

In a first embodiment of the invention a utility vehicle cargo box may comprise a pair of composite polymer side panels attached to a metal floor with a plurality of threaded fasteners that allow relative movement of the side panels with respect to the floor; a plurality of accessory fasteners on the side panels for mounting an accessory at a plurality of different locations in the cargo box.

In a second embodiment a utility vehicle cargo box comprising a floor including a metal plate having slots in a rear surface thereof; a pair of composite polymer side panels fastened to the floor by a plurality of fasteners that allow relative movement of the side panels fore and aft with respect to the floor; and a stiffening member attached to each side panel and inserted into the slots; each stiffening member resisting rearward movement of the side panel.

The utility vehicle cargo box may further comprise a composite polymer tail gate hinged to the side panels as well as a load guard, the side panels fastened to the load guard by a plurality of fasteners that allow relative movement of the side panels fore and aft with respect to the load guard and an opening may be provided in the load guard and a pass-through door hinged to the opening.

The utility vehicle cargo box may further comprise a tail light mounting recess on each side panel; a tail light mounted in each recess; and an opening behind each tail light for light to pass through the side panel.

The floor may include a top plate and a bottom plate.

The utility vehicle cargo box may further comprise a plurality of lateral frame members intersecting a plurality of longitudinal frame members supporting the floor; the lateral or longitudinal frame members having slots for positioning the other frame members and/or a release lever for tilting and dumping the cargo box, the release lever being parallel to the load guard and under the cargo box, the release lever being actuated by horizontal movement and/or U-bolts attached to each side panel and having threaded ends inserted through slots in the cargo box floor.

According to another embodiment of the invention a utility vehicle cargo box may comprise a metal floor and load guard, each having a plurality of slots; a pair of composite polymer side panels fastened to the metal floor and load guard using threaded fasteners extending through the slots such that the side panel can move relative to the metal floor and load guard; each side panel having a rear end with a stiffening member attached thereto; and the stiffening member removably connected to the metal floor.

The utility vehicle cargo box may further comprise a plurality of accessory mounting structures removably attached to each side panel and/or a tail light mounting recess at the end of each side panel, a tail light mounted in each recess, and an aperture behind each tail light for light to pass through.

The floor may further comprise a top sheet metal panel having first reinforcing structures overlaying a bottom sheet metal panel having second reinforcing structures oriented perpendicular to the first reinforcing structures.

An accessory bar may be mounted to each composite polymer side panel.

The utility vehicle cargo box may further comprising a top cover mounted on the cargo box laterally inwardly from the accessory bars.

At least one accessory may be mountable to the accessory bars with clamps tightenable at a plurality of positions along the accessory bars, wherein the accessory is a load divider.

Embodiments of the invention described below are shown in the drawings, in which
- Fig. 1: is a rear perspective view of a first embodiment of a cargo box for a utility vehicle.
- Fig. 2: is a front perspective view of a first embodiment of a cargo box for a utility vehicle.
- Fig. 3: is a bottom perspective view of a first embodiment of a cargo box for a utility vehicle.
- Fig. 4: is a view of a release latch for the cargo box of Fig. 2, partially in section, according to a first embodiment.
- Fig. 5: is a rear perspective view of a second embodiment of a cargo box for a utility vehicle.
- Fig. 6: is an exploded rear perspective view of the second embodiment.
- Fig. 7: is a rear perspective view of the second embodiment having a load divider in the cargo box.
- Fig. 8: is a rear perspective view of the second embodiment with a top cover mounted over the cargo box.

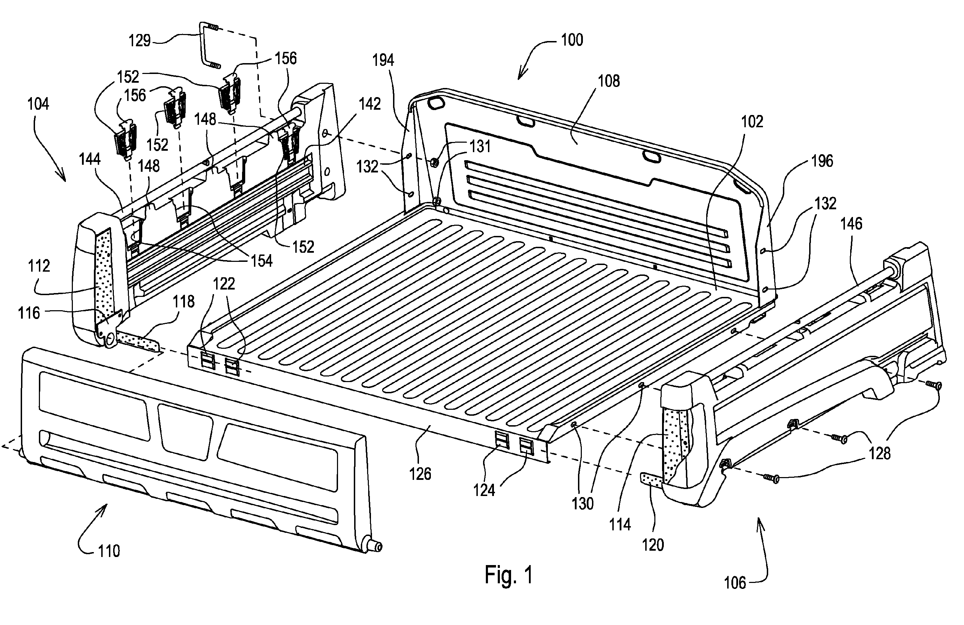

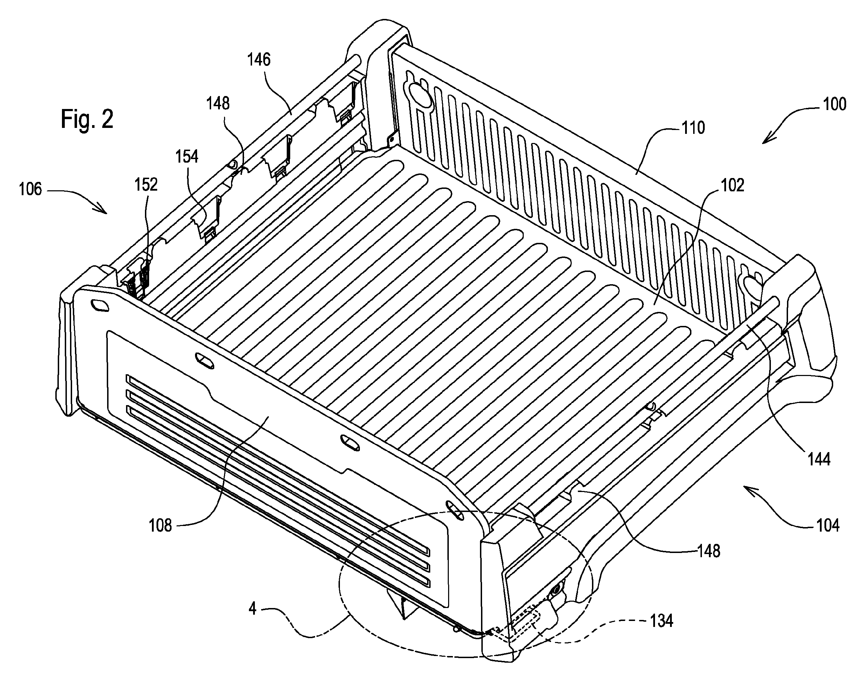

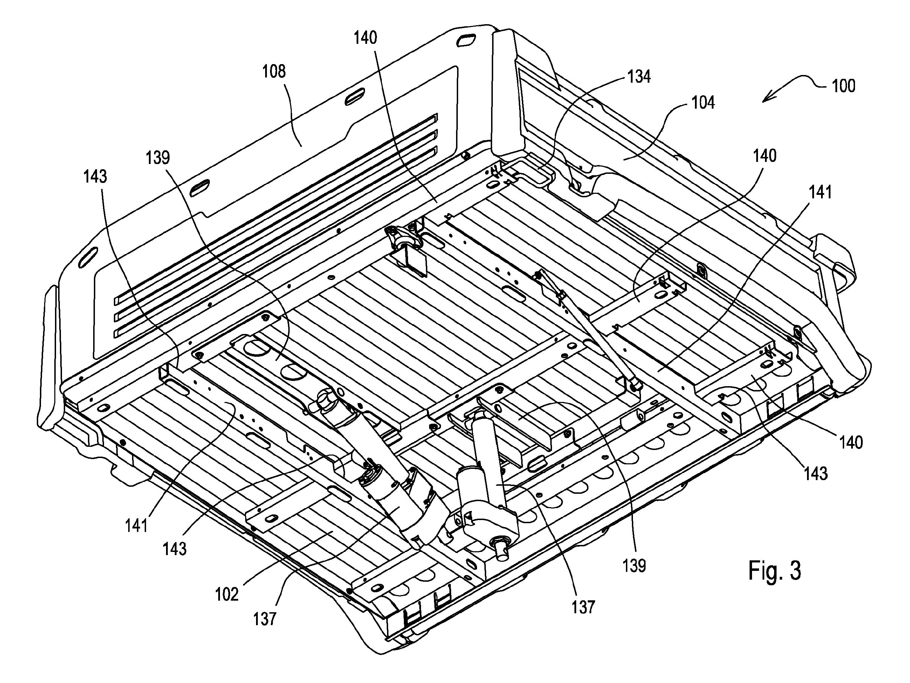

In a first embodiment of the invention shown in Figs. 1-4, cargo box 100 for a utility vehicle may have a floor 102, left and right side panels 104, 106, load guard 108, and tailgate 110. The left and right side panels, and the tailgate, may be molded from a light weight material such as fiber-reinforced polypropylene, blow-molded plastic or another reinforced polymer. In the first embodiment, the floor of the cargo box and the load guard may be sheet steel.

In the embodiment of Figs. 1-4, the left and right side panels are provided with stiffening members 112, 114 attached to the rear of each side panel. The stiffening members may be used to anchor the rearward end of each side panel to the cargo box floor at a fixed position, preventing any rearward movement of the side panels that could open a gap at the rear of the box. Each stiffening member also may hold the rear edge of the side panel in generally vertical alignment, and prevent the side panel from bending outwardly from the cargo box. For example, each stiffening member 112, 114 may be a steel L-shaped bracket attached using a fastener 116 to the side panel adjacent the rear edge of the side panel. The lower leg 118, 120 of each L-shaped bracket may be slip-fit through slots 122, 124 in the rear edge 126 of the cargo box floor.

In a first embodiment shown in Figs. 1-4, each side panel also may be fastened to the cargo box floor by inserting threaded fasteners 128 through slots 130 in the left and right edges of the floor that allow movement of the side panels fore and aft relative to the floor. Additionally, each side panel may be fastened to the left and right edges 194, 196 of the load guard by inserting threaded fasteners 129 through slots 132 in the left and right edge of the load guard. Each of the slots may be oriented fore and aft. Thhreaded fastener 129 may be a U-bolt that is press fit into a side panel and held firmly in place. Barrel nuts may be tightened onto the threaded ends of the threaded fasteners. Although the slots allow fore and aft movement of the side panels relative to the floor, stiffening members 112, 114 may resist rearward movement of the side panels that could result in formation of a gap between the cargo box and tail gate, and thereby prevent material leakage from the box through the gap.

In one embodiment, each side panel may be easily detached and removed from the cargo box. This may be done by removing the barrel nuts from the threaded fasteners and sliding the stiffening members out from the slots at the rear of the cargo box floor.

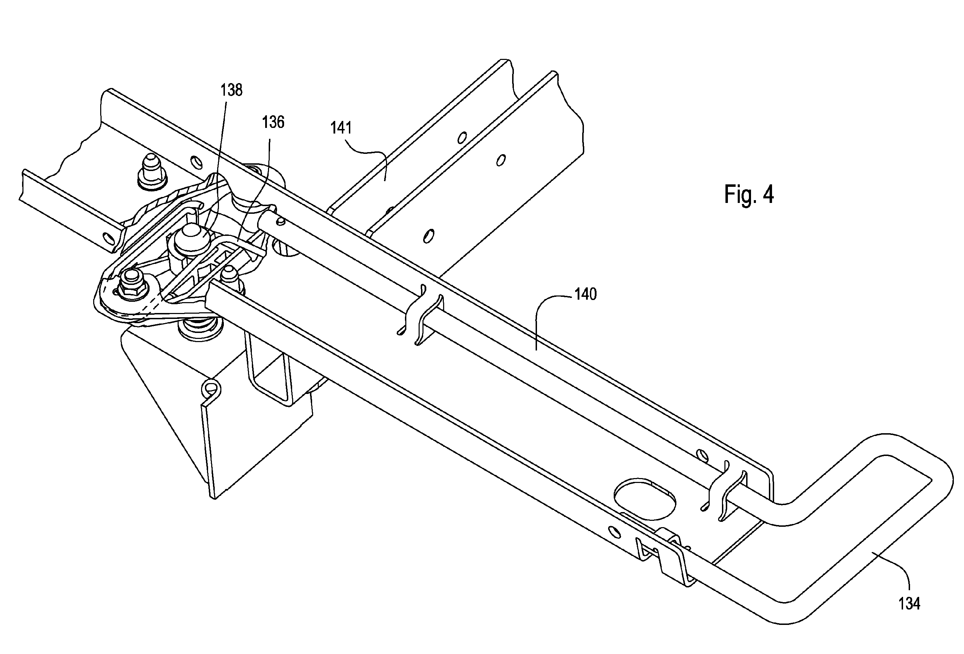

In one embodiment, the cargo box may be provided with release lever 134 that an operator may used to tilt and/or dump the cargo box. As shown in detail in Fig. 4, release lever 134 may be attached to wire form 136 that engages latch mechanism 138. Release lever 134 may extend through a channel in one of the lateral frame members 140 under the cargo box and parallel to load guard 108. To disengage the latch, release lever 134 may be pulled horizontally, or laterally outwardly, in a direction parallel to the load guard. The release lever and latch may be biased to the engaged position. Piston assemblies such as hydraulic cylinders or pneumatic dampers 137 may be fastened to braces 139 that are attached between adjacent lateral frame members 140 under cargo box floor, to help facilitate raising, tilting and/or dumping of the cargo box.

In one embodiment, lateral frame members 140 intersect and pass through notches 143 in a pair of longitudinal frame members 141, to provide structural support over the full width of the cargo box floor. The longitudinal frame members also may be channel shaped, and have a plurality of notches to self-locate the lateral frame members and thereby simplify manufacturing of the cargo box.

In one embodiment, the surface of each side panel facing the interior of the cargo box may have one or more raised horizontal load volume indicating stripes or ribs 142 that may be used to measure the volume of material required to fill the cargo box to its rated load capacity, and/or one or more levels below that capacity. Each horizontal stripe or rib 142 also may provide stiffening characteristics. An outer cosmetic or appearance panel also may be attached to the exterior surface of each side panel.

In one embodiment, accessory bars 144, 146 may be fastened to the left and right side panels. Each accessory bar may be tubular metal with a plastic coating. The ends of each accessory bar may be inserted into recesses near the front and rear near the upper surface of each side panel. The upper surfaces of each side panel also may include one or more reinforcing projections 148 to help support the accessory bar. Various accessories may be mounted to the accessory bars by clamps that are tightened to either or both accessory bars. The accessories may include tool mounts, tool boxes, bed wall extensions, or working lights, for example. Each clamp may slide along an accessory bar or rack member, and tightened at any position along the length of the bar. For example, the clamps may be hand tightened by over-center latches or threaded tighteners.

In one embodiment, several accessory fasteners 152 may be removably attached to each of the side panels, and may be used for mounting various accessories in the cargo box. Each accessory fastener 152 may slide into a tapered slot 154 on the surface of the side panel facing inside the cargo box. Each accessory fastener 152 may have a dovetail intefit into the slot. Additionally, a clip 156 may be connected to each accessory fastener to releasably hold it in place in the slot.

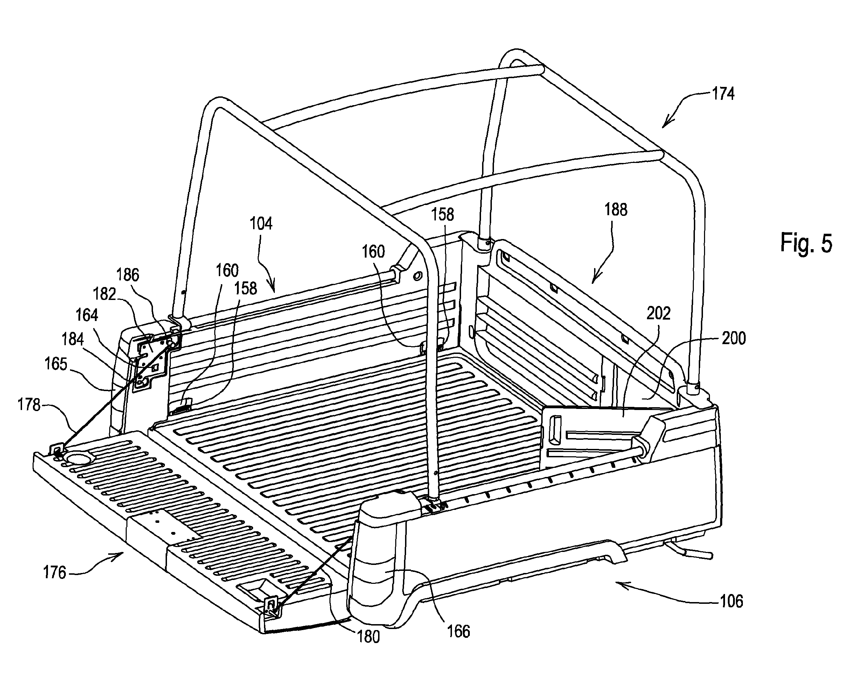

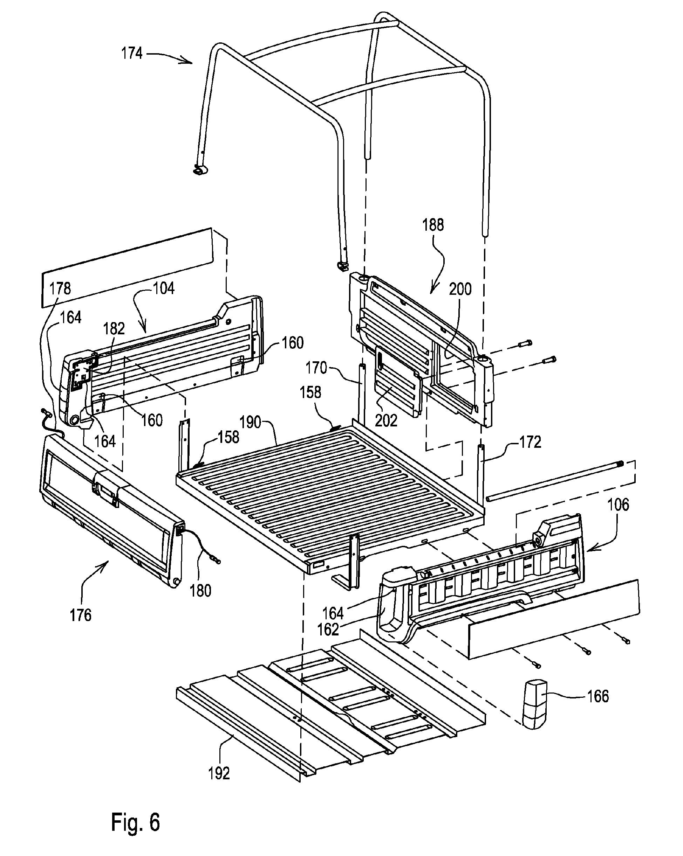

In a second embodiment shown in Figs. 5-8, the threaded fasteners that secure the side panels to the cargo box floor also may be used to secure tie down straps 158 to the floor. The lower edge of each side panel facing the cargo box interior may have a recess 160 where each tie down strap 158 may be positioned to allow an operator easy access to the strap. Each strap may be below the plane of the cargo box floor and within the inwardly facing surface of the side panel, so that the material in the cargo box will not interfere with the strap.

In a second embodiment shown in Figs. 5-8, a tail light mounting recess 162 may be provided in the rear of each side panel. The tail light mounting recess may include an aperture or opening 164 behind the tail light for light to pass from each tail light 165, 166 to the interior of the cargo box, thereby illuminating the cargo box interior. Each tail light may be a sealed unit having a clear lens so that light can pass from the tail light through the opening into the cargo box.

In one embodiment, the edges of the cargo box floor may be folded to provide vertically oriented surfaces. Additionally, the cargo box floor may have a non-skid texture applied to its surface, such as a poly urea coating. The floor also may have a plurality of parallel reinforcing structures oriented between the front and back of the floor, such as ribs stamped into the surface.

In the second embodiment, the cargo box floor may include a top sheet metal plate 190 overlaying a bottom sheet metal plate 192. The pair of plates may be attached to each other by spot welds, tape or adhesive. Portions of the cargo box floor may include a gap between the top and bottom plates, and a barrier layer optionally may be provided in the gap. The bottom plate may have reinforcing structures perpendicular to those of the top plate, extending between the left and right edges of the bottom plate. In one embodiment, a pair of corner posts or uprights 170, 172 may be fastened by welds or other means at or near the front corners of the cargo box floor. For example, the uprights may be hollow steel tubes.

In the embodiment shown in Figs. 5-8, overhead rack 174 may be removably attached to the cargo box. The overhead rack may be a structure constructed from tubular members that are welded together. For example, the overhead rack may include front and rear inverted U-shaped members, front legs and rear legs, and a pair of generally horizontal bars. Various accessories may be mounted to the overhead rack.

In the embodiment of Figs. 5-8, tail gate 176 may be a composite polymer material such as fiber-reinforced polypropylene. The tail gate may be blow molded and may have multiple stiffening members. The tailgate may be hinged at each side to the side panels. A pair of lanyards 178, 180 may be fastened to the top left and right edges of the tail gate. The end of each lanyard may be fastened to a slot in latch plate 182 at the rear of each side panel. For example, the lanyard may be fastened to a lower positioning slot 184 in the latch plate to hold the tailgate in a dropped position, or to upper positioning slot 186 to hold the tail gate horizontal.

In the embodiment of Figs. 5-8, load guard 188 may be a composite polymer material such as fiber-reinforced polypropylene. The load guard may have an opening 200 covered by pass-through door 202. The pass-through door may be hinged to the load guard to allow access through the opening between the cargo box interior and operator station of the vehicle. The opening increases the capacity of the cargo box to carry lengthy objects exceeding the length of the cargo box itself.

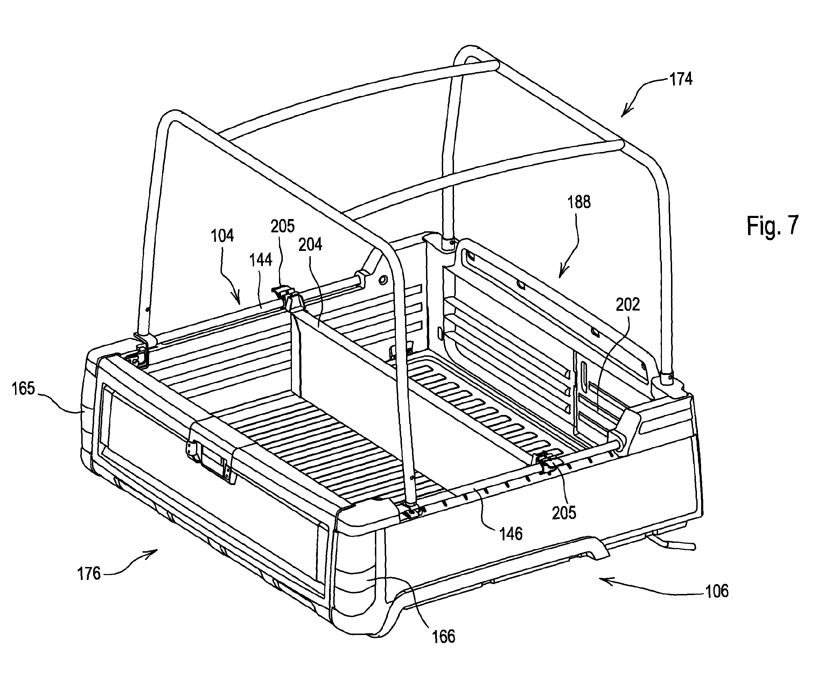

In the embodiment of Fig. 7, one or more load dividers 204 may be positioned in the cargo box at desired positions, with each load divider fastened to accessory bars on the left and right side of the cargo box with clamps 205. The load divider may be used to separate different materials that are unsecured to the cargo box.

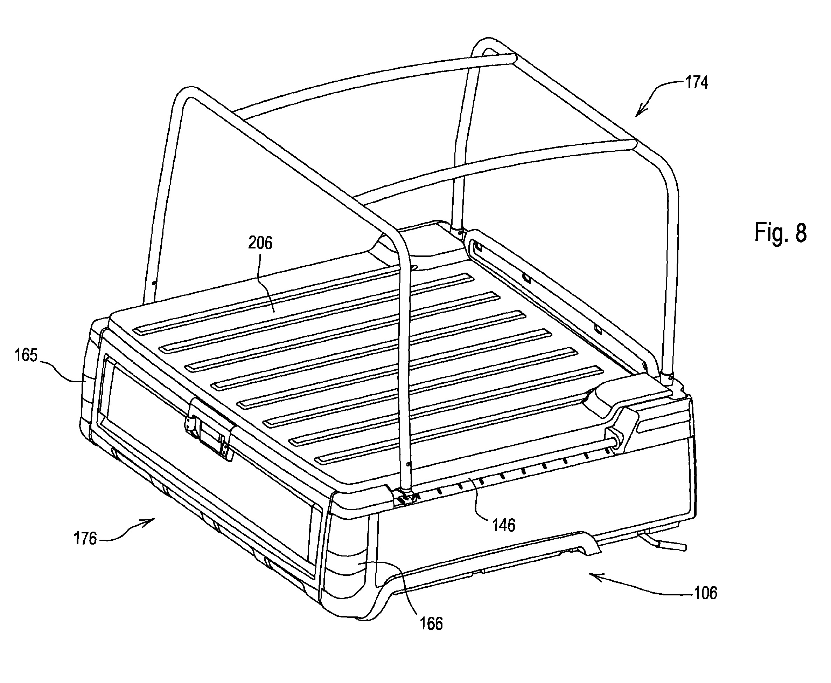

In the embodiment of Fig. 8, top cover 206 is shown mounted on the cargo box so that the accessory bars on each side of the cargo box are accessible with the top cover in place. This placement of the top cover so that its left and right sides are laterally inward from the accessory bars allows the accessory bars to be used for tying down material or objects that may be placed on the upper surface of the top cover.

Having described a preferred embodiment, it will become apparent that various modifications can be made without departing from the scope of the invention as defined in the accompanying claims.

## Claims

1. A utility vehicle cargo box (100), **characterized by** a pair of composite polymer side panels (104, 106) attached to a metal floor (102) with a plurality of threaded fasteners (128, 129) that allow relative movement of the side panels (104, 106) with respect to the floor; a plurality of accessory fasteners (144, 146, 152) on the side panels for mounting an accessory at a plurality of different locations in the cargo box (100)

2. The utility vehicle cargo box according to claim 1, **characterized by** a stiffening member (112, 144) between each side panel (104, 106) and the metal floor (102).

3. The utility vehicle cargo box according to claim 1 or 2, **characterized in that** the accessory is a load divider (204).

4. The utility vehicle cargo box according to one or several of the previous claims, **characterized by** a load guard (108, 188) preferably having a pass-through opening (200) and a hinged door (202) attached thereto.

5. The utility vehicle cargo box according to one or several of the previous claims, **characterized in that** the composite side panels (104, 106) are fiber reinforced polypropylene.

6. The utility vehicle cargo box according to one or several of the previous claims, **characterized by** a tail light (165, 166) mounted to each side panel (104, 106); and an opening behind each tail light (165, 166) for light to pass from the tail light (165, 166) into the cargo box (100).
